**Europäisches Patentamt**

(19) **European Patent Office**

**Office européen des brevets**

(11) Veröffentlichungsnummer: **0 021 263**
**B1**

(12) # EUROPÄISCHE PATENTSCHRIFT

(45) Veröffentlichungstag der Patentschrift:
05.05.82

(51) Int. Cl.³: **D 21 C 3/00** // B01J2/28

(21) Anmeldenummer: **80103277.2**

(22) Anmeldetag: **12.06.80**

(54) Verfahren zur Zellstoffgewinnung unter Verwendung eines Mittels, das organische, cyclische, Keto- und/oder Hydroxygruppen enthaltende Verbindungen enthält.

(30) Priorität: **25.06.79 DE 2925545**

(43) Veröffentlichungstag der Anmeldung:
**07.01.81 Patentblatt 81/1**

(45) Bekanntmachung des Hinweises auf die Patenterteilung:
**05.05.82 Patentblatt 82/18**

(84) Benannte Vertragsstaaten:
**AT BE DE FR GB IT SE**

(56) Entgegenhaltungen:
EP-A-0 006 201
DE-A-2 844 710
DE-C-967 976

TAPPI JOURNAL OF THE TECHNICAL ASSOCIATION OF THE PULP AND PAPER INDUSTRY, Band 62, Nr. 8, August 1979,
Atlanta, GA, US
T. J. FULLERTON "Soda-anthraquinone pulping. The advantages of using oxygen-free conditions", Seiten 55–57.

(73) Patentinhaber: **BAYER AG, Zentralbereich Patente, Marken und Lizenzen, D-5090 Leverkusen 1, Bayerwerk (DE)**

(72) Erfinder: **Neumaier, Hermann, Dr., Kurlandweg 33, D-5653 Leichlingen (DE)**
Erfinder: **Advena, Hans-Jürgen, Dr., In der Hildscheid 14, D-5068 Odenthal (DE)**

**Verfahren zur Zellstoffgewinnung unter Verwendung eines Mittels, das organische, cyclische, Keto-
und/oder Hydroxygruppen enthaltende Verbindungen enthält**

Es ist beschrieben (s. z.B. Bach, G. Fiehn, Zellstoff und Papier 21, 3 (1972); H.H. Holton, Pulp and Paper Canada 78, 19 (1977); US-A-4 012 280; US-A-4 036 680; US-A-4 036 681; CA-A-986 662; JA-A-112 903/75; JA-A-43403/76; JA-A-109 303/76 und DD-A-98 549), dass Anthrachinonderivate und bestimmte Diketohydroanthracene eine günstige Wirkung bei bestimmten Verfahren zur Gewinnung und Bleichung von Zellstoff aus Lignocellulosematerialien wie Holz, Stroh und Bagasse ausüben, wenn sie von 0,001 bis 10 Gew.-%, bezogen auf das Lignocellulosematerial, eingesetzt werden. Neben Anthrachinon, Anthrahydrochinon, sowie Diels-Alder-Addukten aus Butadien und seinen Derivaten an p-Benzochinon oder 1,4-Naphthochinon werden hierfür die Mono- und Polyalkyl-, -Alkoxy-, -Amino-, -Hydroxy und/oder -Sulfoderivate dieser Verbindungen empfohlen. Im folgenden werden diese Stoffe zusammenfassend als Zusatzstoffe bezeichnet.

Die Zusatzstoffe sind im allgemeinen in Form von Pulvern zugänglich. Die Einbringung derartiger pulverförmiger Zusatzstoffe in Verfahren zur Gewinnung von Zellstoffen aus Lignocellulosematerialien und deren Bleichung ist jedoch problematisch. Wenn man die pulverförmigen Zusatzstoffe dem einzusetzenden Lignocellulosematerial zufügt, so ist hierbei damit zu rechnen, dass die feineren Anteile der Zusatzstoffe staubförmig in die Umgebung gelangen, somit teilweise der zugedachten Verwendung entzogen sind, die in der Nähe der Zugabestelle arbeitenden Menschen belästigen und die Gefahr von Staubexplosionen herbeiführen können. Ausserdem ist bei der relativ geringen Menge der benötigten Zusatzstoffe eine gleichmässige Verteilung schwierig. Eine gleichmässige Verteilung der Zusatzstoffe ist jedoch zur Erzielung einer einheitlichen Zellstoffqualität erwünscht.

Eine gleichmässige Verteilung der Zusatzstoffe wird zudem dadurch erschwert, dass die Zusatzstoffe in Wasser und in den in der Zellstoffgewinnung verwendeten wässrigen Elektrolytlösungen im allgemeinen nur sehr wenig löslich sind (z.B. lösen sich in 1 l Wasser bei 50°C nur $6 \cdot 10^{-4}$ g 9,10-Anthrachinon).

Ausserdem werden die Zusatzstoffe von Wasser und wässrigen Elektrolytlösungen, wie sie bei der Zellstoffgewinnung zur Anwendung kommen, so schlecht benetzt, dass die feineren Anteile der pulverförmigen Zusatzstoffe sich nicht oder nur schlecht einrühren lassen, sondern unbenetzt, gegebenenfalls unter Lufteinschluss, auf der Oberfläche schwimmen. Weiterhin haben die Zusatzstoffe eine relativ hohe spezifische Dichte (z.B. hat Anthrachinon bei 20°C eine spezifische Dichte von 1,438 g/cm³), so dass die gröberen Anteile der pulverförmigen Zusatzstoffe, die sich in Wasser oder Elektrolytlösung einrühren lassen, sich rasch wieder absetzen und nach kurzem Stehen am Gefässboden eine kompakte, nur mit Schwierigkeiten wieder aufwirbelbare Schicht bilden. Die Zugabe der Zusatzstoffe direkt zur Kochlauge, in die Mischung von Lignocellulosematerial und Kochlauge oder in Form einer Anschlämmung in Wasser oder verdünnten Elektrolytlösungen ist also ebenfalls kein Weg, um mit Sicherheit eine gleichmässige Verteilung der Zusatzstoffe zu erreichen.

Es wurde nun gefunden, dass sich die vorstehend aufgezeigten Schwierigkeiten vermeiden lassen, wenn man die organischen, cyclischen, Keto- und/oder Hydroxygruppen enthaltenden Verbindungen in Form in bestimmter Weise hergestellter Granulate einsetzt.

Die vorliegende Erfindung betrifft daher ein Verfahren zur Zellstoffgewinnung aus Lignocellulosematerialien in Gegenwart von organischen, cyclischen, Keto- und/oder Hydroxygruppen enthaltenden Verbindungen, das dadurch gekennzeichnet ist, dass man die organischen, cyclischen, Keto- und/oder Hydroxygruppen enthaltenden Verbindungen in Form von Granulaten einsetzt, die dadurch erhalten werden, dass man die organischen, cyclischen, Keto- und/oder Hydroxygruppen enthaltenden Verbindungen und gegebenenfalls weitere Bestandteile der Granulate in fein verteilter Form durch Besprühen mit Wasser oder einer wässrigen Flüssigkeit in einer Menge von 5 bis 30 Gew.-% (bezogen auf die feinverteilten Bestandteile des Mittels) granuliert und das so erhaltene Granulat trocknet.

Zur Herstellung der erfindungsgemäss zu verwendenden Granulate können als organische, cyclische, Keto- und/oder Hydroxygruppen enthaltende Verbindungen beispielsweise mono-, di- und/oder polycyclische, insbesondere mono-, di- und/oder tricyclische, besonders bevorzugt tricyclische, Verbindungen eingesetzt werden, die 2 Keto- und/oder 2 Hydroxygruppen enthalten. Vorzugsweise kommen hierfür p-Benzochinon, 1,4-Naphthochinon, 9,10-Anthrachinon, Diels-Alder-Addukte von 1,3-Dienen, z.B. von unsubstituiertem oder substituiertem Butadien an p-Benzochinon und/oder 1,4-Naphthochinon und/oder deren Monoalkyl-, Dialkyl-, Hydroxy-, Amino-, Alkoxy-, Alkylamino- und/oder Sulfoderivate in Frage. Beispielsweise kann man 9,10-Anthrachinon, 2-Methylanthrachinon, 2-Ethylanthrachinon, 2,3-Dimethyl-9,10-anthrachinon, 2,6-Dimethylanthrachinon, 2,7-Dimethylanthrachinon, 2-Aminoanthrachinon, 1-Methoxyanthrachinon, 1,4,4a,9a-Tetrahydro-9,10-diketoanthracen, 2-Ethyl-1,4,4a,9a-Tetrahydro-9,10-diketoanthracen, 2,3-Dimethyl-1,4,4a,9a-Tetrahydro-9,10-diketoanthracen, 1,4,4a,5,8,8a,9a,10a-Octahydro-9,10-diketoanthracen, 1,3-Dimethyl-1,4,4a,9a-tetrahydro-9,10-diketoanthracen und 2,3,6,7-Tetramethyl-1,4,4a,5,8,8a,9a,10a-octahydro-9,10-diketoanthracen einsetzen. Man kann auch 2 oder mehrere dieser Stoffe einsetzen. Es ist auch möglich, Verbindungen einzusetzen, die 2 oder mehr der genannten Substituenten tragen, beispielsweise Hydroxy- und Aminogruppen. Bevorzugt setzt man jedoch nur einen dieser Stoffe ein, ganz besonders bevorzugt 9,10-Anthrachinon.

Die organischen, cyclischen, Keto- und/oder Hydroxygruppen enthaltenden Stoffe, insbesondere 9,10-Anthrachinon, werden zur Herstellung der erfindungsgemäss zu verwendenden Granulate in feinverteilter Form eingesetzt. Beispielsweise können die organischen, cyclischen, Keto- und/oder Hydroxygruppen enthaltenden Verbindungen, insbesondere 9,10-Anthrachinon, zu mindestens 80 Gew.-% aus Teilchen mit Korngrössen unter 10 μm bestehen. Die organischen, cyclischen, Keto- und/oder Hydroxygruppen enthaltenden Stoffe, insbesondere 9,10-Anthrachinon, bestehen vorzugsweise zu mindestens 80 Gew.-% aus Teilchen mit einer Korngrösse von unter 5 μm.

Man kann die organischen, cyclischen Keto- und/oder Hydroxygruppen enthaltenden Verbindungen durch Mahlung in eine solche feinverteilte Form bringen. Zur Durchführung eines derartigen Mahlvorganges kommen beispielsweise übliche Trockenzerkleinerungsapparate in Frage, wie Kugelmühlen, Rotor-Stator-Mühlen, Stiftmühlen, Hammermühlen und Strahlmühlen, gegebenenfalls mit geeigneten nachgeschalteten Sichtern. Die Strahlmühlen können z.B. mit Luft oder Wasserdampf betrieben werden.

Zur Herstellung der erfindungsgemäss zu verwendenden Granulate können als Tenside praktisch alle kationischen, nichtionischen und anionischen Tenside eingesetzt werden.

Als kationische Tenside kommen beispielsweise quarternäre langkettige und/oder oxethylierte Amine, quarternäre Pyridiniumverbindungen oder langkettige Phosphoniumverbindungen in Frage. Langkettig bedeutet dabei eine Kohlenstoffkette mit mindestens 4 C-Atomen, vorzugsweise mit mindestens 6 C-Atomen.

Beispiele für kationische Tenside sind insbesondere: Trimethyl-hexadecyl-ammoniumbromid, Cetyl-pyridiniumbromid, Lauryl-dimethylbenzyl-ammoniumchlorid, Monoester des Triethanolamins mit Stearinsäure als ameisensaure oder essigsaure Salze, N-Lauryl-methylbenzimidazolchlorhydrat und Dodecyl-trimethyl-phosphoniumbromid.

Ein grosser Teil dieser Verbindungen und weitere in Betracht kommende kationische Tenside sind z.B. in K. Lindner, Tenside – Textilhilfsmittel – Waschrohstoffe, Band 1, Seiten 963 bis 1041 (1964), beschrieben.

Als nichtionische Tenside kommen beispielsweise Anlagerungsprodukte von Alkylenoxiden, insbesondere Ethylenoxid, an höhere Fettsäuren, Alkohole, Phenole, Säureamide, Mercaptane, Amine oder Alkylphenole, in Frage. Die Anlagerungsprodukte können beispielsweise aus 5 bis 50 Mol Alkylenoxid und 1 Mol Fettsäure, Alkohol, Phenol, Säureamid, Mercaptan, Amin oder Alkylphenol, die mindestens 4, vorzugsweise mindestens 6 C-Atome aufweisen, erhalten werden. Als nichtionogene Tenside kommen auch Anlagerungsprodukte von Alkylenoxiden, insbesondere Ethylenoxid, an Polypropylenoxid oder an Zucker, sowie oxethylierte und nicht-oxethylierte Zuckerderivate, wie Fettsäureester des Pentaerythrits oder der Saccharose, in Frage.

Beispiele für nichtionogene Tenside sind insbesondere: Anlagerungsprodukte von 5 bis 20 Mol Ethylenoxid an Stearinsäure, Oleylalkohol, Polypropylenglykol, Nonylphenol, Ölsäureamid und Dodecylamin.

Ein grosser Teil dieser Verbindungen und weitere in Betracht kommende nichtionogene Tenside sind z.B. in N. Schönfeldt, Grenzflächenaktive Ethylenoxid-Addukte, Seiten 42 bis 95 (1976) und in K. Lindner, Tenside – Textilhilfsmittel – Waschrohstoffe, Band 1, Seiten 837 bis 917 (1964), beschrieben.

Vorzugsweise werden in den erfindungsgemäss zu verwendenden Granulaten anionische Tenside eingesetzt. Als anionische Tenside kommen beispielsweise Alkylsulfonate, sulfatierte ungesättigte höhere Fettsäuren, Sulfonate von Polycarbonsäureestern, Alkylbenzolsulfonate, sulfatierte aliphatische Alkohole, mit einer anorganischen mehrbasigen Säure, wie Phosphorsäure oder insbesondere Schwefelsäure, in saure Ester überführte Anlagerungsprodukte von Ethylenoxid an höhere Amine, Säuren, Phenole oder Alkohole, sowie Ligninsulfonate oder Derivate von Ligninsulfonaten, Kondensationsprodukte aus aromatischen Sulfonsäuren und Formaldehyd und Polyphosphate in Frage.

Beispiele für anionische Tenside sind insbesondere: Natriumdodecylsulfonat, Natriumlaurylsulfat, Natriumdodecylbenzolsulfonat, Diisobutylnaphthalinsulfonat, saure Schwefelsäureester des Anlagerungsproduktes von 2 Mol Ethylenoxid an 1 Mol Nonylphenol, Natriumdioctylsulfosuccinat, Kondensationsprodukte aus Kresol, 2-Naphthol-6-sulfonsäure und Formaldehyd, sowie Sulfonsäuren von Naphthalin, Terphenyl oder Ditolylether, jeweils kondensiert mit Formaldehyd. Alle anionischen Tenside werden vorzugsweise in Form ihrer Alkali- und/oder Ammoniumsalze eingesetzt.

Ein grosser Teil dieser Verbindungen und weitere in Betracht kommende anionische Tenside sind in K. Lindner, Tenside – Textilhilfsmittel – Waschrohstoffe, Band 1, Seiten 571 bis 835 (1964), beschrieben.

In das erfindungsgemässe Verfahren werden besonders bevorzugt Ligninsulfonate und/oder Kondensationsprodukte aus aromatischen Sulfonsäuren und Formaldehyd als Tenside eingesetzt, z.B. die Lithium-, Natrium-, Kalium-, Magnesium-, Calcium- und/oder Ammoniumsalze der Ligninsulfonsäure. Es können auch beliebige Mischungen von anionischen und nichtionischen Tensiden eingesetzt werden.

Die Tenside können beispielsweise in einer solchen Menge eingesetzt werden, dass das getrocknete Granulat 60 bis 99 Gew.-% organische, cylische, Keto- und/oder Hydroxygruppen enthaltende Verbindungen und 40 bis 1 Gew.-% Tenside enthält. Vorzugsweise werden die Tenside in einer solchen Menge eingesetzt, dass das getrocknete Granulat 80 bis 90 Gew.-% organische, cyclische, Keto- und/oder Hydroxygruppen enthaltende Verbindungen und 20 bis 10 Gew.-% Tenside enthält.

Die erfindungsgemäss zu verwendenden Granulate werden erhalten, indem man die organischen, cyclischen, Keto- und/oder Hydroxygruppen enthaltenden Verbindungen mit den Tensiden vermischt, diese Mischung mahlt, dann die gemahlene Mischung mit Wasser oder wässriger Flüssigkeit besprüht und das so gebildete Granulat trocknet. Man kann die Tenside auch separat in entsprechender Weise wie die organischen, cyclischen, keto- und/oder Hydroxygruppen enthaltenden Verbindungen mahlen und in gemahlener Form den gemahlenen organischen, cyclischen, Keto- und/oder Hydroxygruppen enthaltenden Verbindungen zumischen. Ferner kann man die Tenside auch in Wasser lösen und eine derartige wässrige Lösung zur Besprühung von gemahlenen organischen, cyclischen, Keto- und/oder Hydroxygruppen enthaltenden Verbindungen verwenden. Es ist auch möglich, einen Teil der Tenside zusammen mit oder getrennt von den organischen, cyclischen, Keto- und/oder Hydroxygruppen enthaltenden Verbindungen zu mahlen, die gemahlenen Tenside und die gemahlenen organischen, cyclischen, Keto- und/oder Hydroxygruppen enthaltenden Verbindungen zu mischen und die restliche Menge der Tenside dem Wasser oder der wässrigen Flüssigkeit zur Besprühung zuzusetzen. Vorzugsweise wird das erfindungsgemässe Verfahren durchgeführt, indem man die Tenside zusammen mit den organischen, cyclischen, Keto- und/oder Hydroxygruppen enthaltenden Verbindungen mahlt.

Falls die erfindungsgemäss zu verwendenden Granulate in Zellstoffgewinnungsprozessen eingesetzt werden sollen, die im alkalischen Medium durchgeführt werden, kann es vorteilhaft sein, den organischen, cyclischen, Keto- und/oder Hydroxygruppen enthaltenden Verbindungen vor der Mahlung oder dem Wasser bzw. der wässrigen Flüssigkeit vor dem Besprühen geringe Mengen eines alkalisch reagierenden Stoffes zuzufügen. Solche alkalisch reagierenden Stoffe, insbesondere alkalisch reagierende Salze, können auch zunächst in entsprechender Weise wie die organischen, cyclischen, Keto- und/oder Hydroxygruppen enthaltenden Verbindungen gemahlen und dann in gemahlener Form den gemahlenen organischen, cyclischen, Keto- und/oder Hydroxygruppen enthaltenden Verbindungen vor der Besprühung zugemischt werden. Geeignete zuzufügende alkalische Stoffe sind beispielsweise NaOH, KOH, $Na_2CO_3$, $K_2CO_3$ und/oder LiOH. Alkalisch reagierende Stoffe können beispielsweise in Mengen von 0,2 bis 5 Gew.-% (bezogen auf das fertige Granulat) zugesetzt werden. Der Zusatz solcher Stoffe erfolgt vorzugsweise zu dem Wasser oder der wässrigen Flüssigkeit, mit der besprüht wird.

Falls die erfindungsgemäss zu verwendenden Granulate vor dem Einsatz in ein Verfahren zur Zellstoffgewinnung in eine wässrige Dispersion überführt werden sollen, kann es vorteilhaft sein, den organischen, cyclischen, Keto- und/oder Hydroxygruppen enthaltenden Verbindungen vor der Mahlung Stoffe zuzusetzen, die eine Stabilisierung von Dispersionen bewirken. Solche Stoffe können auch zunächst in entsprechender Weise wie die organischen, cyclischen, Keto- und/oder Hydroxygruppen enthaltenden Verbindungen gemahlen und dann in gemahlener Form den gemahlenen organischen, cyclischen, Keto- und/oder Hydroxygruppen enthaltenden Verbindungen zugemischt werden. Stoffe, welche eine Stabilisierung von Dispersionen bewirken, können beispielsweise sein: Hochdisperse Kieselsäure, Magnesium- und Aluminiumsilikate, Montmorillonite, die auch organische Basen enthalten können, Kreide und/oder Verdickungsmittel wie Methylcellulose, Hydroxymethylcellulose, Hydroxyethylcellulose, Carboxymethylcellulose, sowie Polyacrylate und/oder Polymethacrylate und/oder deren Mischpolymerisate, sowie Kombinationen der genannten Stoffe. Solche Stoffe können beispielsweise in Mengen von 0 bis 5 Gew.-%, vorzugsweise von 0,1 bis 1 Gew.-% (jeweils bezogen auf das fertige Granulat) zugesetzt werden.

Den organischen, cyclischen, Keto- und/oder Hydroxygruppen enthaltenden Verbindungen und/oder dem Wasser bzw. der wässrigen Flüssigkeit zum Besprühen können weiterhin Konservierungsmittel zugesetzt werden. Als Konservierungsmittel kommen Stoffe in Frage, welche z.B. die Schimmelbildung und/oder den Bakterienbefall verhindern. Hierfür sind übliche Konservierungsmittel geeignet, z.B. Pentachlorphenolnatrium und Additionsprodukte von Paraformaldehyd mit aromatischen Alkoholen, insbesondere Benzylalkohol. Konservierungsmittel können beispielsweise in Mengen von 0 bis 3 Gew.-%, vorzugsweise in Mengen von 0,05 bis 0,5 Gew.-% (jeweils bezogen auf das fertige Granulat) zugesetzt werden. Sofern die Konservierungsmittel in Wasser nicht oder schlecht löslich sind, werden sie vorzugsweise den organischen, cyclischen, Keto- und/oder Hydroxygruppen enthaltenden Verbindungen vor der Mahlung zugefügt oder separat in entsprechender Weise wie die organischen, cyclischen, Keto- und/oder Hydroxygruppen enthaltenden Verbindungen gemahlen und in gemahlener Form den gemahlenen organischen, cyclischen, Keto- und/oder Hydroxygruppen enthaltenden Verbindungen zugemischt. In Wasser lösliche Konservierungsmittel werden vorzugsweise dem Wasser oder der wässrigen Flüssigkeit zum Besprühen zugefügt.

Bei der Herstellung der erfindungsgemäss zu verwendenden Granulate kann es vorteilhaft sein, weitere Bestandteile einzubringen, gegebenenfalls zusätzlich zu alkalisch reagierenden Stoffen oder Konservierungsmitteln. Solche weiteren Bestandteile können beispielsweise anorganische Salze, Kohlehydrate, Harnstoff, Harnstoffderivate und/oder wasserlösliche Polymere sein.

Die zuvor beschriebenen Zusätze von anorganischen Salzen, Harnstoff und Harnstoffderivaten, Kohlehydraten und/oder wasserlöslichen Polymeren können im allgemeinen dem Wasser bzw. der wässrigen Flüssigkeit zum Besprühen und/oder den organischen, cyclischen, Keto- und/oder Hydroxygruppen enthaltenden Verbindungen vor oder nach deren Mahlung zugesetzt werden. Wenn die Zusätze nach der Mahlung der organischen, cyclischen, Keto- und/oder Hydroxygruppen enthaltenden Verbindungen zugesetzt werden, werden sie zweckmässigerweise separat in gleicher Weise wie die organischen, cyclischen, Keto- und/oder Hydroxygruppen enthaltenden Verbindungen gemahlen.

Beispiele für anorganische Salze sind Chloride und Sulfate von Alkalimetallen, Magnesium und Ammonium, insbesondere Magnesiumsulfat, Kaliumsulfat, Natriumsulfat, Kaliumchlorid, Ammoniumsulfat, Lithiumsulfat und Ammoniumchlorid. Solche Zusätze können z.B. in Mengen von 0 bis 80 Gew.-%, vorzugsweise von 0 bis 20 Gew.-% (bezogen auf das fertige Granulat) erfolgen. Der Zusatz von anorganischen Salzen erfolgt bevorzugt zu den organischen, cyclischen, keto- und/oder Hydroxygruppen enthaltenden Verbindungen vor deren Mahlung.

Zusätze von Harnstoff und Harnstoffderivaten können z.B. in Mengen von 0 bis 20 Gew.-%, vorzugsweise von 0 bis 10 Gew.-% (bezogen auf das fertige Granulat) erfolgen. Der Zusatz von Harnstoff oder Harnstoffderivaten erfolgt bevorzugt zu den organischen, cyclischen, Keto- und/oder Hydroxygruppen enthaltenden Verbindungen vor deren Mahlung.

Beispiele für Kohlehydrate sind Stärke, Zucker, Methylcellulose und Hydroxypropylmethylcellulose. Solche Zusätze können z.B. in Mengen von 0 bis 20 Gew.-%, vorzugsweise von 0 bis 10 Gew.-% (bezogen auf das fertige Granulat) erfolgen. Der Zusatz von Kohlehydraten kann zu den organischen, cyclischen, Keto- und/oder Hydroxygruppen enthaltenden Verbindungen vor deren Mahlung und/oder zu dem Wasser erfolgen, mit dem besprüht wird.

Beispiele für wasserlösliche Polymere sind Polyvinylalkohol, Poylvinylpyrrolidon und Mischungen von Rohrzucker und Natriumsalzen von polymeren Carboxysäuren und Polyoxethylenethern. Solche Zusätze können z.B. in Mengen von 0 bis 15 Gew.-%, vorzugsweise von 0 bis 8 Gew.-% (bezogen auf das fertige Granulat) erfolgen. Der Zusatz von wasserlöslichen Polymeren erfolgt bevorzugt zu dem Wasser, mit dem besprüht wird.

Alle diese Zusätze haben den Vorteil, dass die Brückenbildung zwischen den Einzelteilchen der organischen, cyclischen, Keto- und/oder Hydroxygruppen enthaltenden Verbindungen gefördert und damit der Aufbau des Granulats erleichtert wird.

Wenn bei der Herstellung der erfindungsgemäss zu verwendenden Granulate neben Tensiden auch alkalisch reagierende Stoffe, Konservierungsmittel, anorganische Salze, Harnstoff oder Harnstoffderivate, Kohlehydrate und/oder wasserlösliche Poylmere verwendet werden, beträgt die Summe dieser Zusätze (einschliesslich Tensiden) vorteilhaft insgesamt nicht mehr als 30 Gew.-% (bezogen auf das fertige Granulat).

In dem Wasser bzw. der wässrigen Flüssigkeit zum Besprühen können auch organische, mit Wasser mischbare Lösungsmittel enthalten sein. Solche Lösungsmittel können beispielsweise Alkohole sein, insbesondere solche mit 1 bis 8 C-Atomen, beispielsweise Methanol, Ethanol, Isopropanol und Butanol. Solche Lösungsmittel können dem Wasser bzw. der wässrigen Flüssigkeit beispielsweise in Mengen von 0 bis 40 Gew.-% (bezogen auf Wasser) zugesetzt werden und haben den Vorteil, dass sie eine bessere Oberflächenbenetzung der organischen, cyclischen, Keto- und/oder Hydroxygruppen enthaltenden Verbindungen bewirken können.

Zum Besprühen können weiterhin Flüssigkeiten verwendet werden, die Wasser, gegebenenfalls Tenside, und einen oder mehrere der vorgenannten Zusätze in beliebiger Kombination enthalten.

Die Besprühung der feinverteilten organischen, cyclischen, Keto- und/oder Hydroxygruppen enthaltenden Verbindungen, die gegebenenfalls die beschriebenen Zusätze enthalten können, mit Wasser oder wässriger Flüssigkeit kann in üblichen Apparaturen zur Aufbaugranulierung vorgenommen werden. Beispielsweise kommen hierfür Mischgranulatoren, Siebgranulatoren, Tellergranulatoren, Extruder- und Wirbelschicht- bzw. Fliessbettgranulatoren in Frage. Die Granulierung kann sowohl diskontinuierlich als auch kontinuierlich durchgeführt werden. Die Besprühung erfolgt mit Wasser oder einer wässrigen Flüssigkeit, welche die zuvor beschriebenen Bestandteile enthalten kann, in einer Menge von 5 bis 30 Gew.-% Wasser oder wässriger Flüssigkeit (bezogen auf die feinverteilten Bestandteile). Vorzugsweise ist diese Menge 5 bis 15 Gew.-%. Zur Besprühung können übliche Düsen verwendet werden. Bevorzugt werden Zweistoffdüsen verwendet, um einen möglichst feinen Sprühnebel zu erzeugen.

Die Besprühung kann beispielsweise bei 10 bis 60°C und Drucken im Bereich von 0,5 bis 2,5 bar durchgeführt werden. Vorzugsweise wird die Besprühung bei Raumtemperatur bis 40°C und bei Drucken im Bereich von 1 bis 2 bar durchgeführt.

Nach der Besprühung liegen feuchte Granulate vor. Diese werden erfindungsgemäss noch getrocknet. Für die Trocknung können übliche Trocknungsapparate eingesetzt werden, beispielsweise Rohrtrockner, Umlufttrockenschränke, Trocknungsbänder oder Gefriertrockner. Vorzugsweise werden Wirbelschicht- bzw. Fliessbett-Trockner eingesetzt. Geeignete Trocknungsbedingungen sind beispielsweise Temperaturen im Bereich von 40 bis 90°C und Drucke im Bereich von 0,5 bis 2,5 bar. Vorzugsweise erfolgt die Trocknung bei Temperaturen im Bereich von 60 bis 80°C und bei Drucken im Bereich von 1 bis 2 bar.

Es kann vorteilhaft sein, aus den so erhaltenen trockenen Granulaten staubförmige und grössere Agglomerate auszusieben. Hierfür können übliche Siebmaschinen verwendet werden. Vorzugsweise weisen die erfindungsgemäss hergestellten Granulate, gegebenenfalls nach der Aussiebung, einen Partikeldurchmesser im Bereich von 0,1 bis 5 mm, vorzugsweise im Bereich von 0,2 bis 2 mm auf. Die feineren Anteile können gegebenenfalls erneut in die Besprühung, die groberen Anteile gegebenenfalls in die Mahlung zurückgeführt werden.

Die erfindungsgemäss zu verwendenden Granulate können einen sehr hohen Anteil an der eigentlichen Wirksubstanz aus der Gruppe der organischen, cyclischen, Keto- und/oder Hydroxygruppen enthaltenden Verbindungen aufweisen, der beispielsweise 80 bis 90 Gew.-% (bezogen auf das fertige Granulat) betragen kann. Die erfindungsgemäss zu verwendenden Granulate bilden beim Eintragen in Wasser oder in bei der Zellstoffgewinnung (z.B. nach dem Kraft- oder Sodaprozess) üblichen Aufschlusslösungen spontan Dispersionen, in denen die organischen, cyclischen, Keto- und/oder Hydroxygruppen enthaltenden Verbindungen überwiegend in Teilchengrössen von unter 10 μm vorliegen. Dadurch können die günstigen Effekte der Gegenwart dieser Verbindungen bei Zellstoffgewinnungsverfahren optimal genutzt werden, da auf einfache Weise die gleichmässige Verteilung dieser Verbindungen erreicht wird. Die erfindungsgemäss zu verwendenden Granulate verändern sich unter üblichen Lagerbedingungen auch bei längerer Lagerung nicht. Durch die körnige Beschaffenheit sind sie gut rieselfähig, gut dosierbar und können mit hoher Arbeitssicherheit gehandhabt werden.

Übliche in der Technik angewendete Aufbaugranulate, beispielsweise im Gebiet der Farbstoffe, Pflanzenschutzmittel und Pharmazeutika, die auf ähnliche Weise wie die erfindungsgemäss hergestellten Granulate hergestellt wurden, enthalten im allgemeinen 5 bis maximal 70 Gew.-% des für die Verwendung wesentlichen Stoffes. Die erfindungsgemäss zu verwendenden Granulate können dagegen bis zu 90 Gew.-% und mehr organische, cyclische, Keto- und/oder Hydroxygruppen enthaltende Verbindungen enthalten. Solche hochkonzentrierten Granulate haben den Vorteil, dass einerseits wenig Zusatzstoffe gebraucht werden und damit die Transportkosten und die Risiken bei der Verwendung niedrig gehalten werden, andererseits aber trotzdem eine gut dispergierende Substanzform erhalten wird.

Unter dem Begriff «Verfahren zur Zellstoffgewinnung» werden dabei alle Verfahren und Verfahrensstufen verstanden, bei denen auf Lignin in Lignin und Cellulose enthaltenden Materialien auf chemische Weise eingewirkt wird. Beispiele hierfür sind alkalische, neutrale und saure Aufschlussverfahren bei Lignocellulosematerialien wie Holz, Stroh, Bagasse und Gräsern, sowie Bleichverfahren bei teilweise oder weitgehend aufgeschlossenen Lignocellulosematerialien.

Die Verfahren zur Zellstoffgewinnung können in an sich bekannter Weise durchgeführt werden.

Beispielsweise können diese Verfahren durchgeführt werden, indem man Lignocellulosematerialien in einer Sulfitlösung, die sauer, neutralisch oder alkalisch sein kann, digeriert und der Digerierlösung vor oder nach Zugabe des Lignocellulosematerials die erfindungsgemäss zu verwendenden Granulate zuführt. Man kann die erfindungsgemäss zu verwendenden Granulate auch in die bekannten Zellstoffgewinnungsverfahren einsetzen, die als Kraft-Verfahren, Soda-Verfahren und Polysulfid-Verfahren bezeichnet werden. Man kann die zu verwendenden Granulate weiterhin in das bekannte Sauerstoff-Alkali-Verfahren zur Zellstoffgewinnung und/oder in die für die Zellstoffgewinnung bekannten Bleichverfahren einsetzen.

In das erfindungsgemässe Verfahren zur Zellstoffgewinnung und Zellstoffbleichung kann man die erfindungsgemäss zu verwendenden Granulate beispielsweise in einer Menge von 0,001 bis 10 Gew.-% (bezogen auf Lignocellulosematerial) einsetzen. Vorzugsweise wird in das erfindungsgemässe Verfahren zur Zellstoffgewinnung 9,10-Anthrachinon in Form der erfindungsgemäss zu verwendenden Granulate eingesetzt.

Das erfindungsgemässe Verfahren zur Zellstoffgewinnung hat eine Reihe von Vorteilen. So ist beispielsweise die Dosierung und gleichmässige Verteilung von organischen, cyclischen, Keto- und/oder Hydroxygruppen enthaltenden Verbindungen ohne Schwierigkeiten möglich und es werden als Folge davon Zellstoffe einheitlicher Qualität erhalten. Weiterhin ist es möglich, die unter idealen Bedingungen im Labormassstab festgestellten positiven Effekte des Zusatzes von organischen, cyclischen, Keto- und/oder Hydroxygruppen enthaltenden Verbindungen in grosstechnischen Zellstoffgewinnungsanlagen zu realisieren.

Bei den Laborexperimenten wurden z.B. das Lignocellulosematerial in der Aufschluss- bzw. Bleichflüssigkeit bewegt, was die Verteilung der Zusatzstoffe erleichtert. In grosstechnischen Zellstoffgewinnungsanslagen ist dies nur in untergeordnetem Mass der Fall und damit die Verteilung der Zusatzstoffe erschwert, wenn sie nicht in Form der erfindungsgemäss zu verwendenden Granulate eingesetzt werden.

Beispiele

Im folgenden bedeutet die Abkürzung GT Gewichtsteile.

Beispiel 1

80 GT 9,10-Anthrachinon wurden mit 18 GT sprühgetrockneter Sulfitablauge, die Ligninsulfonate enthält und 2 GT Diisobutylnaphthalin-natriumsulfonat gemischt und strahlgemahlen. Die Teilchengrösse der pulverförmigen Mischung lag danach unter 10 μm. Diese pulverförmige Mischung wurde in einem Mischgranulator mit reibenden Elementen unter Besprühung mit 8 Gew.-% Wasser (bezogen auf die pulverförmige Mischung) granuliert. Nach Trocknung des Granulats wurden die Teilchen mit einer Partikelgrösse im Bereich von 0,1 bis 2,0 mm abgesiebt. Das Produkt war staubfrei und in Wasser spontan dispergierbar. Das Produkt kann über das Volumen dosiert werden und es liess sich gut in Holzaufschlusslauge einrühren.

Beispiel 2

Es wurde verfahren wie in Beispiel 1, jedoch wurden 85 GT 9,10-Anthrachinon, 13 GT sprühgetrocknete Sulfitablauge, die Ligninsulfonate enthält und 2 GT Diisobutylnaphthalin-natriumsulfonat eingesetzt und die pulverförmige Mischung in einem Siebgranulator granuliert. Das so erhaltene Produkt hatte die gleichen Eigenschaften wie das Produkt aus Beispiel 1.

Beispiel 3

Es wurde verfahren wie in Beispiel 1, jedoch wurden 75 GT 9,10-Anthrachinon, 23 GT sprühgetrocknete Sulfitablauge, die Ligninsulfonate enthält und 2 GT Diisobutylnaphthalin-natriumsulfonat eingesetzt und die pulverförmige Mischung in einem Tellergranulator granuliert. Das so erhaltene Produkt hatte die gleichen Eigenschaften wie das Produkt aus Beispiel 1.

Beispiel 4

Es wurde verfahren wie in Beispiel 1, jedoch wurden 90 GT 9,10-Anthrachinon, 2 GT Diisobutylnaphthalin-natriumsulfonat und 8 GT sprühgetrocknete Sulfitablauge in einem Wirbelschichtgranulator (Hersteller: Aeromatik, Muttenz, Schweiz) granuliert. Das so erhaltene Produkt hatte die gleichen Eigenschaften wie das Produkt aus Beispiel 1. Es liess sich gut in Holzaufschlusslaugen des Kraft- und Sodaprozesses einrühren.

Beispiel 5

80 GT 1,4-Benzochinon wurden mit 18 GT sprühgetrockneter Sulfitablauge, die Ligninsulfonate enthält und 2 GT Diisobutylnaphthalin-natriumsulfonat gemischt und strahlgemahlen. Die Teilchengrösse der pulverförmigen Mischung lag danach unter 10 µm. Diese pulverförmige Mischung wurde in einem Wirbelschichtgranulator (Hersteller: Aeromatik, Muttenz, Schweiz) unter Besprühung mit 9 Gew.-% Wasser (bezogen auf die pulverförmige Mischung) granuliert. Nach Trocknung des Granulats wurden die Teilchen mit einer Partikelgrösse im Bereich 0,2 bis 2,0 mm abgesiebt. Das Produkt war staubfrei, rieselfähig und in Wasser spontan dispergierbar.

Beispiel 6

Es wurde verfahren wie in Beispiel 5, jedoch wurden 90 GT 2-Aminoanthrachinon, 8 GT sprühgetrocknete Sulfitablauge, die Ligninsulfonate enthält und 2 GT Diisobutylnaphthalin-natriumsulfonat eingesetzt und unter Besprühung mit 8 Gew.-% Wasser granuliert. Die nach der Trocknung ausgesiebten Bestandteile mit Partikelgrössen unter 0,2 mm und über 2,0 mm wurden in den Prozess zurückgeführt. Das Produkt liess sich gut in sog. Weisslauge (= wässrige Lösung der Aufschlusschemikalien) beim Kraft- und Sodaverfahren einrühren und bildete darin spontan eine Dispersion.

Beispiel 7

Es wurde verfahren wie in Beispiel 4, jedoch wurde anstelle des diskontinuierlich arbeitenden Wirbelschicht-Granulators ein kontinuierlich arbeitender Fliessbettgranulator verwendet (Fliessbett Unit 38, Hersteller: Anhydro, Kopenhagen, Dänemark).

Das Produkt führte in Wasser oder Holzaufschlusslauge des Kraft- und Sodaprozesses eingerührt spontan zu Dispersionen mit guter Feinverteilung.

Beispiel 8

Es wurde verfahren wie in Beispiel 6, jedoch wurde ein Fliessbettgranulator entsprechend Beispiel 7 verwendet. Das Produkt führte in Wasser oder Holzaufschlusslauge des Kraft- oder Sodaprozesses eingerührt spontan zu Dispersionen mit guter Feinverteilung.

Beispiel 9

Es wurde verfahren wie in Beispiel 4, jedoch wurden folgende Stoffe eingesetzt:

| organische, cyclische, Keto- und/oder Hydroxygruppen enthaltende Verbindung (GT) | sprühgetrocknete Sulfitablauge (GT) | Diisobutyl-naphthalin-Natriumsulfonat (GT) |
|---|---|---|
| 1-Methyl-anthrachinon (70) | 28 | 2 |
| 1,5-Dimethyl-anthrachinon (80) | 17 | 3 |
| 1-Hydroxyanthrachinon (75) | 22 | 3 |
| 1,5-Dihydroxy-anthrachinon (80) | 18 | 2 |
| 1-Methyl-8-amino-anthrachinon (75) | 23 | 2 |

Es wurden Granulate erhalten, die spontan in Kraft- und Sodaaufschluslaugen dispergieren, staubfrei, rieselfähig und über das Volumen dosierbar sind.

Beispiel 10

80 GT 9,10-Anthrachinon, 8 GT sprühgetrocknete Sulfitablauge, die Ligninsulfonate enthält, 2 GT Diisobutylnaphthalin-natriumsulfonat und 10 GT Harnstoff wurden gemischt und strahlgemahlen. Die Teilchengrösse der pulverförmigen Mischung lag danach unter 10 µm. Diese Mischung wurde in gleicher Weise wie in Beispiel 1 beschrieben granuliert. Das Produkt war staubfrei und in Wasser spontan dispergierbar. Das Produkt kann über das Volumen dosiert werden und liess sich gut in Holzaufschlusslauge einrühren.

**Beispiel 11**

Es wurde verfahren wie in Beispiel 10, jedoch wurden anstelle von Harnstoff 10 GT Polyvinylalkohol eingesetzt. Die Eigenschaften des Produkts waren wie in Beispiel 10 angegeben.

**Beispiel 12**

Es wurde verfahren wie in Beispiel 10, jedoch wurden anstelle von Harnstoff 10 GT Zucker eingesetzt. Die Eigenschaften des Produkts waren wie in Beispiel 10 angegeben.

**Patentansprüche**

1. Verfahren zur Zellstoffgewinnung aus Lignocellulosematerialien in Gegenwart organischer, cyclischer, Keto- und/oder Hydroxygruppen enthaltender Verbindungen, dadurch gekennzeichnet, dass man die organischen, cyclischen, Keto- und/oder Hydroxygruppen enthaltenden Verbindungen in Form von Granulaten einsetzt, die dadurch erhalten werden, dass man die organischen, cyclischen, Keto- und/oder Hydroxygruppen enthaltenden Verbindungen und gegebenenfalls weitere Bestandteile der Granulate in feinverteilter Form durch Besprühen mit Wasser oder einer wässrigen Flüssigkeit in einer Menge von 5 bis 30 Gew.-% (bezogen auf die feinverteilten Bestandteile des Mittels) granuliert und das so erhaltene Granulat trocknet.

2. Verfahren nach Anspruch 1, dadurch gekennzeichnet, dass man zur Herstellung der Granulate als organische, cyclische, Keto- und/oder Hydroxygruppen enthaltende Verbindungen mono-, di- und/oder tricyclische Verbindungen einsetzt, die 2 Keto- und/oder 2 Hydroxygruppen enthalten.

3. Verfahren nach Ansprüchen 1 und 2, dadurch gekennzeichnet, dass man zur Herstellung der Granulate als organische, cyclische Keto- und/oder Hydroxygruppen enthaltende Verbindungen p-Benzochinon, 1,4-Naphthochinon, 9,10-Anthrachinon, Diels-Alder-Addukte von 1,3-Dienen an p-Benzochinon und/oder 1,4-Naphthochinon und/oder deren Monoalkyl-, Dialkyl-, Hydroxy-, Amino-, Alkoxy-, Alkylamino- und/oder Sulfoderivate einsetzt.

4. Verfahren nach Ansprüchen 1 bis 3, dadurch gekennzeichnet, dass die zur Herstellung der Granulate verwendeten organischen, cyclischen, Keto- und/oder Hydroxygruppen enthaltenden Verbindungen zu mindestens 80 Gew.-% aus Teilchen einer Korngrösse von unter 10 μm bestehen.

5. Verfahren nach Ansprüchen 1 bis 4, dadurch gekennzeichnet, dass man zur Herstellung der Granulate anionische Tenside verwendet.

6. Verfahren nach Ansprüchen 1 bis 5, dadurch gekennzeichnet, dass man zur Herstellung der Granulate die Tenside in einer solchen Menge einsetzt, dass das getrocknete Granulat 10 bis 20 Gew.-% Tenside enthält.

7. Verfahren nach Ansprüchen 1 bis 6, dadurch gekennzeichnet, dass man zur Herstellung der Granulate den organischen, cyclischen, Keto- und/oder Hydroxygruppen enthaltenden Verbindungen oder dem Wasser bzw. der wässrigen Flüssigkeit zum Besprühen alkalisch reagierende Stoffe in einer Menge von 0,2 bis 5 Gew.-% (bezogen auf das fertige Granulat) zusetzt.

8. Verfahren nach Ansprüchen 1 bis 7, dadurch gekennzeichnet, dass man zur Herstellung der Granulate den organischen, cyclischen, Keto- und/oder Hydroxygruppen enthaltenden Verbindungen Tenside, Stoffe, die eine Stabilisierung von Dispersionen bewirken, Konservierungsmittel, anorganische Salze, Harnstoff, Harnstoffderivate, Kohlehydrate und/oder wasserlösliche Polymere zusetzt.

9. Verfahren nach Ansprüchen 1 bis 8, dadurch gekennzeichnet, dass man zur Herstellung der Granulate dem Wasser bzw. der wässrigen Flüssigkeit zum Besprühen Tenside, Konservierungsmittel, anorganische Salze, Harnstoff, Harnstoffderivate, Kohlehydrate, wasserlösliche Polymere und/oder organische mit Wasser mischbare Lösungsmittel zusetzt.

**Claims**

1. Process for the production of pulp from lignocellulose materials in the presence of organic, cyclic compounds containing keto and/or hydroxyl groups, characterised in that the organic, cyclic compounds containing keto and/or hydroxyl groups are employed in the form of granules, which are obtained by granulating the organic, cyclic compounds containing keto and/or hydroxyl groups and optionally other constituents of the granules in finely divided form by spraying with water or an aqueous liquid in an amount of 5 to 30% by weight (relative to the finely divided constituents of the agent), and the granules thus obtained are dried.

2. Process according to Claim 1, characterised in that, for the production of the granules, mono-, di- and/or tricyclic compounds which contain 2 keto and/or 2 hydroxyl groups are employed as the organic, cyclic compounds containing keto and/or hydroxyl groups.

3. Process according to Claims 1 and 2, characterised in that, for the production of the granules, p-benzoquinone, 1,4-naphthoquinone, 9,10-anthraquinone and Diels-Alder adducts of 1,3-dienes and p-benzoquinone and/or 1,4-naphthoquinone, and/or monoalkyl, dialkyl, hydroxyl, amino, alkoxy, alkylamino and/or sulpho derivatives thereof are employed as the organic, cyclic compounds containing keto and/or hydroxyl groups.

4. Process according to Claims 1 to 3, characterised in that at least 80% by weight of the organic, cyclic compounds, containing keto and/or hydroxyl groups, which are employed for the production of the granules consist of particles having a particle size of less than 10 μm.

5. Process according to Claims 1 to 4, characterised in that anionic surface-active agents are employed for the production of the granules.

6. Process according to Claims 1 to 5, characterised in that, for the production of the granules, the surface-active agents are employed in an amount such that the dried granules contain 10 to 20% by weight of surface-active agents.

7. Process according to Claims 1 to 6, characterised in that, for the production of the granules, alkaline substances are added, in an amount of 0.2 to 5% by weight (relative to the finished granules), to the organic, cyclic compounds containing keto and/or hydroxyl groups or to the water or the aqueous liquid used for spraying.

8. Process according to Claims 1 to 7, characterised in that, for the production of the granules, surface-active agents, substances which have a stabilising effect on dispersions, preservatives, inorganic salts, urea, urea derivatives, carbohydrates and/or water-soluble polymers are added to the organic cyclic compounds containing keto and/or hydroxyl groups.

9. Process according to Claims 1 to 8, characterised in that, for the production of the granules, surface-active agents, preservatives, inorganic salts, urea, urea derivatives, carbohydrates, water-soluble polymers and/or organic watermiscible solvents are added to the water or the aqueous liquid used for spraying.

**Revendications**

1. Procédé de préparation de cellulose (ou de pâte de papier) à partir de matières lignocellulosiques en présence de composés organiques cycliques contenant des groupes cétone et/ou hydroxyle, caractérisé en ce qu'on utilise les composés organiques cycliques, contenant des groupes cétone et/ou hydroxyle, sous forme de granulés qui ont été obtenus par granulation des composés organiques cycliques, contenant des groupes cétone et/ou hydroxyle et éventuellement d'autres constituants des granulés sous forme finement divisée par aspersion avec de l'eau ou avec un liquide aqueux, appliqué en une proportion de 5 à 30% en poids (par rapport aux constituants finement divisés de l'agent) et séchage du granulat ainsi obtenu.

2. Procédé selon la revendication 1, caractérisé en ce que, pour produire les granulés, on utilise comme composés organiques cycliques contenant des groupes cétone et/ou hydroxyle des composés mono-, di- et/ou tri-cycliques qui contiennent deux groupes cétone et/ou deux groupes hydroxyle.

3. Procédé selon les revendications 1 et 2, caractérisé en ce que, pour produire les granulés, on utilise comme composés organiques cycliques contenant des groupes cétone et/ou hydroxyle la p-benzoquinone, la 1,4-naphtoquinone, la 9,10-anthraquinone, des produits d'addition de Diels-Alder de 1,3-diènes sur la p-benzoquinone et/ou sur la 1,4-naphtoquinone et/ou leurs dérivés monoalkylés, dialkylés, hydroxylés, amino-, alcoxylés, alkylamino et/ou sulfonés.

4. Procédé selon les revendications 1 à 3, caractérisé en ce que les composés organiques cycliques, contenant des groupes cétone et/ou hydroxyle, utilisés pour produire des granulés consistent à 80% en poids au moins en des particules dont la grosseur est inférieure à 10 μm.

5. Procédé selon les revendications 1 à 4, caractérisé en ce qu'on utilise des tensio-actifs anioniques pour produire les granulés.

6. Procédé selon les revendications 1 à 5, caractérisé en ce que, pour produire les granulés, on utilise les tensio-actifs en une quantité telle que le granulat séché contient 10 à 20% en poids des tensio-actifs.

7. Procédé selon les revendications 1 à 6, caractérisé en ce que, pour produire les granulés, on ajoute des substances à réaction alcaline, en une proportion de 0,2 à 5% en poids (par rapport au granulat terminé), aux composés organiques cycliques contenant des groupes cétone et/ou hydroxyle ou à l'eau ou au liquide aqueux destiné à l'aspersion.

8. Procédé selon les revendications 1 à 7, caractérisé en ce que, pour produire les granulés, on ajoute aux composés organiques cycliques, contenant des groupes cétone et/ou hydroxyle, des tensio-actifs, des substances qui exercent un effet de stabilisation des dispersions, des agents de conservation, des sels minéraux, de l'urée, des dérivés de l'urée, des glucides ou hydrates de carbone et/ou des polymères hydrosolubles.

9. Procédé selon les revendications 1 à 8, caractérisé en ce que, pour produire les granulés, on ajoute à l'eau ou au liquide aqueux destiné à l'aspersion des tensio-actifs, des agents de conservation, des sels minéraux, de l'urée, des dérivés de l'urée, des hydrates de carbone ou glucides, des polymères hydrosolubles et/ou des solvants organiques miscibles à l'eau.